# EUROPEAN PATENT SPECIFICATION

(11) **EP 1 071 860 B1**
(45) Date of publication and mention of the grant of the patent: **18.05.2005**
(21) Application number: 98950211.7
(22) Date of filing: 29.10.1998
(51) Int. Cl.: E05F 15/00, H01H 3/14

(54) **FORCE-RESPONSIVE DETECTORS AND SYSTEMS AND METHODS OF MAKING THEM**
KRAFT-ABHÄNGIGE DETEKTOREN UND SYSTEME UND IHRE HERSTELLUNGSVERFAHREN
DETECTEURS ET SYSTEMES SENSIBLES A UNE FORCE

(30) Priority: 11.03.1998 GB 9805202
(43) Date of publication of application: 31.01.2001
(73) Proprietor: GDX North America Inc., Dover Delaware 19901 (US)
(72) Inventor: PLOTTNIK, Reimund, D-41747 Viersen (DE)
(74) Representative: Foster, David Martyn
(86) International application number: PCT/GB1998/003222
(87) International publication number: WO 1999/046469

(56) References cited:
- EP-A- 0 669 229
- DE-A- 19 706 481
- DE-U- 29 710 499
- GB-A- 1 369 174
- US-A- 4 621 223
- US-A- 5 167 432

## Description

The invention relates to a force-responsive longitudinally extending sensor, comprising first longitudinally extending electrically conductive means, second electrically conductive means superimposed on the first means, electrically insulating means positioned between and spacing the first means from longitudinally distributed parts of the second means, respective remaining parts of the second means being longitudinally distributed along the sensor and normally being resiliently held spaced apart from the first means by their inherent resilience but each being able to be flexed independently of the other remaining parts and against the resilience into contact with the first means in response to a force applied to that remaining part whereby to enable a force-responsive output to be produced, and means defining a plurality of protruding means extending transversely to the longitudinal extension of the sensor and outwardly of the second means in a direction away from the first means for receiving a force and transmitting it to the remaining parts.

Such a sensor is shown, for example, in DE-A-197 06 481. In this sensor, the second electrically conductive means is of ladder-like configuration with parallel side pieces extending along the length of the sensor and electrically insulated by insulating means from the first electrically conductive means. The cross pieces of the ladder-like configuration of the second electrically conductive means extend resiliently across gaps in the electrically insulating means so that they can be pressed into respective electrical contact with the first electrically conductive means in response to a force applied to any one or more of them individually.

However, if a force is applied over an area encompassing the side pieces and a plurality of the cross pieces of the ladder-like configuration of the second electrically conductive means, the necessary force applied individually to one of the cross pieces, for flexing it into contact with the first electrically conductive means, may not be produced. Therefore, the sensor may not produce any output in response to the force. The invention aims to deal with this problem.

Such a sensor as first set forth above is also known from US-A-4 621 223. This document shows a sensor in which parallel side by side first and second electrically conductive layers are formed on the same surface of an electrically insulating sheet which is folded over to present the conductive layers to each other with a longitudinally extending electrical insulator of ladder-like configuration between them. An externally applied force can flex part of the first conductive layer into contact with the second conductive layer through one of the gaps in the insulator. However, if such a force is applied over a relatively large area, it may not be able to produce such contact because the cross pieces of the ladder-like configuration of the insulator will prevent the necessary flexing of the first conductive layer.

GB-A-1 369 174 shows a switch in which first and second longitudinally extending electrically conducted means in the form of longitudinal strips are arranged with one superimposed over the other and held apart from each other by being supported on respective parts of resilient insulating means. A force may be applied through longitudinally distributed projection or dimples to press the two electrically conductive means together to produce an electrical signal. In this case, though, the insulating means is not placed between longitudinally distributed parts of the two electrically conductive strips. Therefore, the problem mentioned above does not arise in this switch. However, because the two electrically conductive strips are supported by resilient insulating material, the operation of the switch is dependent on the resilience of the insulating material, not simply on the resilience of the conductive strip itself.

According to the invention, therefore, the sensor as first set forth above is characterised in that each protruding means is positioned over a respective one, only, of the remaining parts, the remaining parts having one of said protruding means positioned thereover being spaced apart by at least one remaining part not having one of said protruding means positioned thereover, the arrangement being such that a force applied over an area encompassing a plurality of the remaining parts and a plurality of the longitudinally distributed parts is transmitted to the ones of the remaining parts having one of the protruding means positioned thereover.

Force-responsive sensors and systems embodying the invention, and window safety systems embodying the invention and for use in motor vehicles, will now be described, by way of example only, with reference to the accompanying diagrammatic drawings in which:
Figure 1 is a perspective view of one of the sensors;
Figure 2 is an enlarged end view of the sensor of Figure 1;
Figure 3 is a perspective view of an electrically conductive member used in the sensor of Figures 1 and 2;
Figure 4 is a perspective view of another of the sensors;
Figure 5 is an enlarged end view of the sensor of Figure 4;
Figure 6 is a perspective view of an electrically insulating spacer used in the sensor of Figure 4;
Figure 7 is a perspective view of a further one of the sensors;
Figure 8 is a perspective view of a modified form of the sensor of Figure 7 during a stage in its manufacture; and
Figure 9 is a cross-section of a window channel embodying one of the sensors and fitted to the window frame of a motor vehicle.

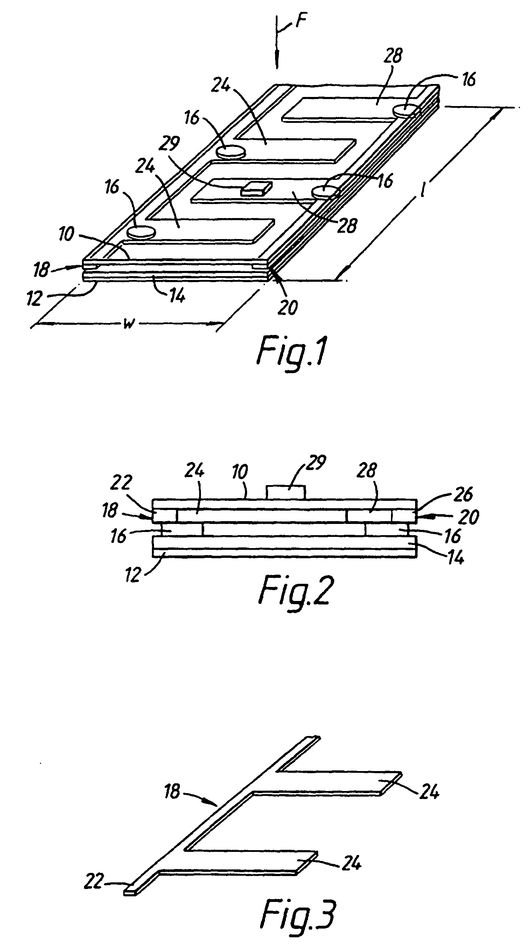

Figures 1,2 and 3 show one of the sensors. It is of indeterminate length *1* and predetermined width *w.* In response to a force applied to it at individual points along its surface and in a direction perpendicular, or at least transverse, to the plane *1w*, it produces an electrically detectable signal.

As shown in Figures 1 and 2, the sensor has a rectangular cover layer 10 which is made of flexible and resilient electrically insulating material and extends over the entire upper surface (as viewed in Figures 1 and 2) of the sensor. In Figure 1 the cover layer 10 is shown as being transparent in order to reveal the construction of the sensor. Normally, however, it would not be transparent.

A similar cover layer 12 is positioned along the under surface of the sensor (as viewed in Figures 1 and 2); the layer 12 is also electrically non-conductive. An electrically conductive layer 14 of rectangular form is mounted on the cover layer 12 and covers substantially its whole length and width. The layer 14 is advantageously an electrically conductive film which may be formed by a printed circuit technique on the layer 12. Mounted at intervals on and along the conductive layer 14 are electrically insulating spacers 16 which again may be formed by a printed circuit technique.

Two separate inter-digitated electrically conductive members 18 and 20 are formed on the underside of the layer 10. They are advantageously electrically conductive films which may be formed by a printed circuit technique on the layer 10. The shape of the member 18 is shown more clearly in Figure 3. As shown, it comprises an edge portion 22 from which fingers 24 integrally extend. Member 20 is similarly shaped, comprising an edge portion 26 with fingers 28. As shown in Figure 1, members 18 and 20 are arranged so that each finger 24 of the member 18 is positioned between two fingers 28 of the member 20.

The spacers 16, in combination with the resilience of the cover layer 10 which carries the members 18 and 20, ensure that there is no normal contact between either of the members 18 and 20 and the conductive layer 14.

As shown in Figures 1 and 2, a protruberance 29 is mounted on the layer 10 immediately above one of the fingers 24,28. There are further such protruberances similarly positioned at intervals along the length of the sensor at suitable intervals (for example, at intervals of 5 or 10 cms), each protruberance being positioned over a finger 24 or 28.

In operation, a force applied to the sensor in the direction of the arrow F will flex the cover layer 10 and thus press one or more of the fingers 24,28 into electrical contact with the underlying conductive layer 14. An electrical circuit is therefore completed and this can be detected in any conventional way.

Clearly, if the force F is applied over a very small area which is positioned between, and less than the area between, two adjacent fingers 24,28, it is possible that no electrical signal will be produced. In practice, therefore, the spacing between the fingers is selected to be sufficiently small to produce the required sensitivity of detection.

If the force is applied to the sensor by means of a generally flat object having a width of the same order as or greater than the width w and a length encompassing several fingers 24,28, such a flat object will contact one or more of the protruberances 29 which will therefore ensure that at least one of the fingers 24,28 will flex into contact with the conductive layer 14. In the absence of the protruberances 29, it is possible that a force applied by such a flat object would not cause the production of an electrical signal because no individual finger 24,28 would be caused to flex.

When a force is applied over a small area, it may of course be applied directly to the cover layer 10 or may be applied via one of the protruberances 29, depending on the position of the point of application of the force.

Although the protruberances 29 have been described as being positioned on the outside surface of the cover layer 10 (or similarly positioned on the layer 14), they could instead be positioned underneath the cover layer 10 (or layer 14) so as to be covered over by the layer if the layer is sufficiently flexible to make this possible. Each such protruberance would therefore produce an outwardly protruding part of the respective layer for achieving the same aim as each protruberance 29.

In Figure 1, the spacers 16 are shown in full line to aid understanding of the drawing. They would of course not in practice be visible.

In a modification, the conductive members 18,20 may be replaced by a conductive member or members of any other suitable shape. For example, the conductive members 18,20 could be replaced by a single continuous conductive layer or film extending over the area *1w* and separated from the layer 14 by separated spacers similar to the spacers 16 and either by its own resilience or by the resilience of the cover layer 12 (in the case where the conductive layer is formed on the layer 12). Again, protruberances 29 would be positioned at intervals along the cover layer 10 to ensure that a force applied by a relatively large generally flat object causes the production of an electrical signal.

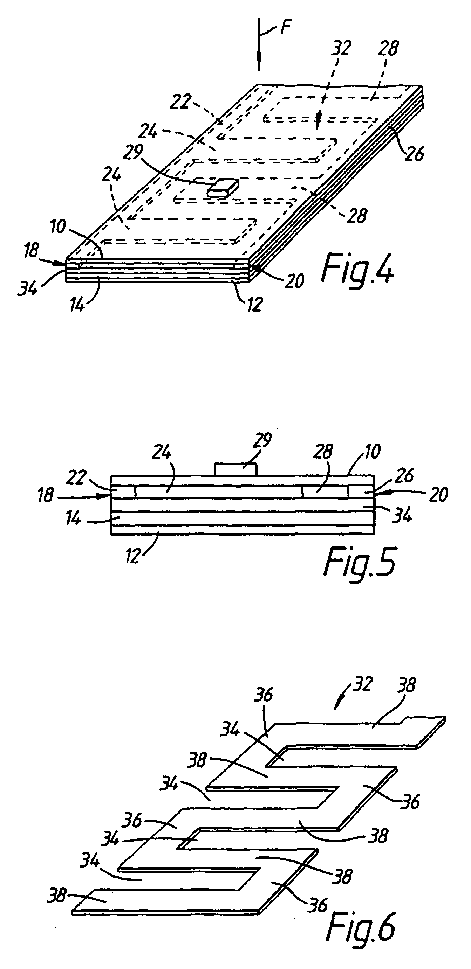

Items in Figures 4,5 and 6 which are similar to items in Figures 1,2 and 3 are similarly referenced.

In the embodiment of Figures 4,5 and 6, the individual spacers 16 of the embodiment of Figures 1,2 and 3 are replaced by a continuous single spacer 32 which is of zig-zag form to define gaps 34 extending widthwise of the sensor and at positions coinciding with the fingers 24 and 28. As before, the fingers 24,28 and the remaining parts of the members 18,20 are formed as films on the underside of the insulating cover layer 10. The portions 36 of the spacer 32 which run in a longitudinal direction of the sensor are positioned between the conductive layer 14 on the one hand and the edge portions 22,26 of the conductive members 18 and 20 on the other hand. The portions 38 of the spacer 32 which run in the transverse direction support the cover layer 10 between the fingers 24,28 and thus indirectly help to support the members 18,20 and maintain their separation from the conductive layer 14. The conductive members 18 and 20 are thus electrically insulated by the spacer 32 from the conductive layer 14. In response to an applied force F, however, and as explained in connection with Figures 1,2 and 3, the cover layer 10 flexes and one or more of the fingers 24,28 is pressed into contact with the conductive layer 14 so as to produce a detectable electrical signal.

Again, protruberances 29 are provided on the cover layer 10 and positioned at intervals along the sensor over the fingers 24,28 to ensure that a force applied by a relatively large that object produces the required electrical signal.

The spacer 32 can be of any suitable shape so as to provide electrically insulating separation between the members 18 and 20 and the layer 14, the support which it provides extending at least partially across the width of the sensor and being shaped so that the support is sufficient without increasing the overall width of the sensor and without reducing its sensitivity to an applied force F. The spacer 32 can be formed on the conductive layer 14 by a normal printed-circuit technique. Instead, however, it could be a separate sheet.

As explained above in connection with Figures 1 to 3, the conductive layers 18,20 in the embodiment of Figures 4 to 6 could be replaced by one or more conductive members of any suitable shape so as to have conductive portions extending over the gaps in the spacer 32 and supported thereover either by their inherent resilience or by the resilience of the cover layer 12 in the case where the conductive portions are formed as films on the layer 12. Again, though, the protruberances 29 would be provided.

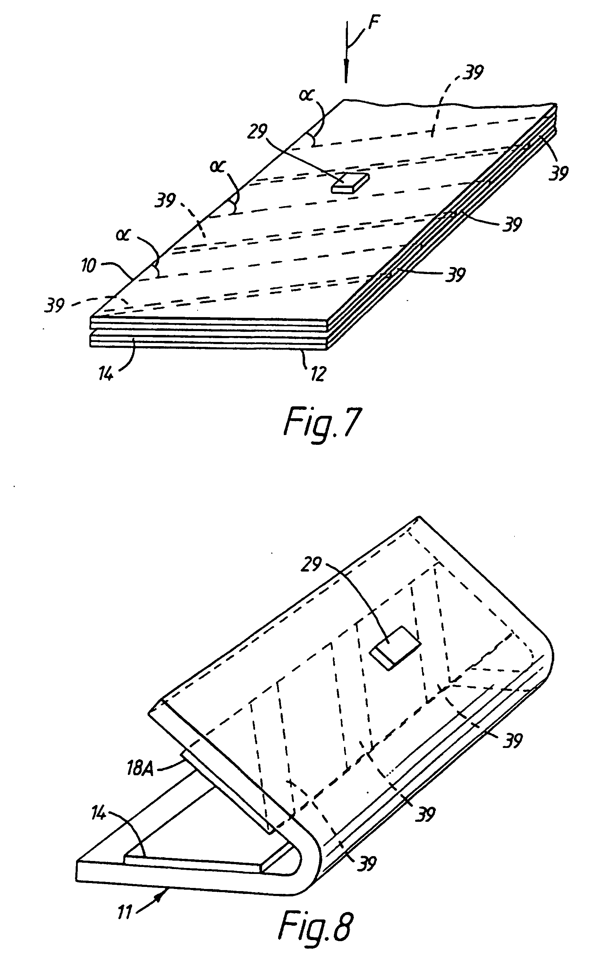

Items in Figure 7 which are similar to items in Figures 1 to 6 are similarly referenced.

In the embodiment of Figure 7, the individual spacers 16 of Figures 1 to 3 and the spacer 32 of Figures 4 to 6 are replaced by a series of insulating spacers 39 extending widthwise of the sensor at intervals therealong, each spacer being at an angle α to the length of the sensor. In this embodiment, the members 18,20 are replaced by a single continuous flexible conductive layer or film 18A extending over substantially the whole of the area lw. In the same manner as previously described, the spacers 39, in combination with the resilience of the cover layer 10, ensure that there is no normal contact between the conductive layer 18A and the conductive layer 14. In response to an applied force F, however, and as explained in connection with the previous embodiments, the cover layer 10 flexes and the conductive layer 18A over one or more of the gaps between the spacers 39 is pressed into contact with the conductive layer 14 so as to produce a detectable electrical signal. Again, the protruberances 29 ensure that the sensor responds to a force applied by a relatively large generally flat object. The protruberances 29 are preferably positioned over gaps between the spacers 39.

Advantageously, the angle α can be varied to alter the sensitivity of the sensor without increasing the overall width of the sensor. Additionally, the width of the spacers 80 can be varied with the same result. Thus, increasing the angle α and/or increasing the width of the spacers 39 will decrease the sensitivity of the sensor to the applied force F.

Figure 8 shows a stage in manufacture of the sensor of Figure 7. As shown, the cover layers 10,12 are respective parts of a single, electrically insulating base sheet 11 which is initially flat. The electrically conductive layers 18A and 14 are formed as parallel strips on the base sheet 11. The insulating spacers 39 are then formed on one of these parallel strips (or on each of them). The protruberances 29 are formed on the outside of the base sheet 11 opposite to the conductive strip 18A (or opposite both conductive strips 18A,14). Finally, the base sheet 11 is folded over to produce the finished sensor. Such a method, using a single base sheet 11, can be used to produce a sensor whether or not the protruberances 29 are to be included.

The sensors described above can be designed not only to respond to a force applied to the uppermost surface shown in the Figures but also to a force applied to the undersurface. This can be achieved by making the layers 12 and 14 resiliently flexible. In such a case, protruberances similar to the protruberances 29 would be positioned on the undersurface.

The sensors shown in Figures 1 to 7 can be used in many applications where it is required to produce an electrical signal in response to an applied force. One particular application relates to the detection of an obstruction in a window opening in a motor vehicle body which is closable by a motorised window glass.

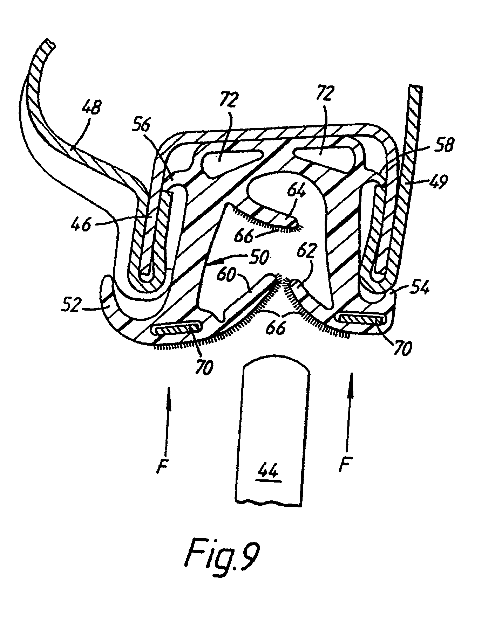

Figure 9 shows a section through a window frame 42 of the window opening. A rigid mounting channel 46 is supported by inner and outer frame members 48 and 49. The mounting channel 46 supports a window sealing and guiding channel 50. The window channel 50 may be made of extruded or moulded flexible material such as rubber or plastics material. The distal edges of the side walls of the channel have outwardly directed lips 52 and 54 which extend over the corresponding edges of the mounting channel 46. Near the base of the channel 50, it has further outwardly directed lips 56 and 58 which engage the curved-over edge regions of the frame members 48 and 49 and resiliently hold the channel 50 within the mounting channel 46.

The channel 50 also has lips 60 and 62 which extend across the mouth of the channel and a further inner lip 64 near the base of the channel. Figure 9 shows the window glass 44 which, as it rises to the closed position, enters the channel 50 with the outer surfaces of the lips 60 and 62 bearing against its opposite faces and the lip 64 bearing against the edge of the glass. The surfaces of the lips 60,62,64 which make contact with the glass 44 may be covered with a layer of flock 66 or other similar material.

Within the distal edge of each side wall of the channel 50, a force-responsive sensor 70 is embedded so as to run longitudinally along the length of at least part of the channel 50; advantageously, the sensors run along that part of the channel 50 which extends along the top of the window opening and down the "A" pillar of the vehicle to the region of the rear view mirror. Advantageously, each sensor 70 has the form shown in Figures 1,2 and 3, in Figures 4,5 and 6, or in Figure 7.

If an obstruction, such as part of the human body, is placed in the window opening when the window glass 44 is wholly or partially open, it will be carried upwardly by the closing window glass and will cause a force F (see Figure 9) to be applied to the distal edges of either or both of the side walls of the channel 50, this force then being transmitted by the material of the channel to the corresponding sensor. As explained in conjunction with the earlier Figures, therefore, one or more of the fingers 24 and/or 28 of the conductive members 18,20 (or the conductive layer 18A in the case of the embodiment of Figure 7) will be moved into electrical contact with the conductive layer 14, thus producing an electrically detectable control signal. This control signal can be used to cause immediate de-energisation of the motor which is raising the window glass, advantageously followed by reversal of the motor to lower it.

## Claims

1. A force responsive longitudinally extending sensor, comprising first longitudinally extending electrically conductive means (14), second electrically conductive means (18,20,18A) superimposed on the first means (14), electrically insulating means (16,32,39) positioned between and spacing the first means (14) from longitudinally distributed parts of the second means (18,20,18A) respective remaining parts (24,28) of the second means (18,20,18A) being longitudinally distributed along the sensor and normally being resiliently held spaced apart from the first means (14) by their inherent resilience but each being able to be flexed independently of the other remaining parts (24,28) and against the resilience into contact with the first means (14) in response to a force applied to that remaining part whereby to enable a force-responsive output to be produced, and means (29) defining a plurality of protruding means extending transversely to the longitudinal extension of the sensor and outwardly of the second means (18,20,18A) in a direction away from the first means (14) for receiving a force and transmitting it to the remaining parts (24,28), **characterised in that** each protruding means (29) is positioned over a respective one, only, of the remaining parts (24,28), the remaining parts (24,28) having one of said protruding means (29) positioned thereover, being spaced apart by at least one remaining part not having one of said protruding means (29) positioned thereover, the arrangement being such that a force applied over an area encompassing a plurality of the remaining parts (24,28) and a plurality of the longitudinally distributed parts is transmitted to the ones of the remaining parts (24,28) having one of the protruding means (29) positioned thereover.

2. A sensor according to claim 1, **characterised in that** the electrically insulating means comprises a plurality of discrete insulating means (16,32,39) spaced longitudinally apart.

3. A sensor according to claim 1 or 2, **characterised in that** the remaining parts of the second means comprise fingers (24,28) extending generally perpendicular to the longitudinal direction and extending over the first means (14).

4. A sensor according to claim 1, **characterised in that** the second electrically conductive means comprises a plurality of electrically conductive strips (24,28) extending parallel to each other and arranged side by side but with spaces between them along the length of the sensor, the strips (24,28) being connected to a conductor (22,26) extending longitudinally of the sensor.

5. A sensor according to claim 4, **characterised in that** the insulating means comprises a plurality of discrete insulating spacers (16) positioned between respective parts only of at least some of the strips (24,28) and the first means (14).

6. A sensor according to claim 5, **characterised in that** the strips (24,28) are formed on a flexible resilient layer (10).

7. A sensor according to claim 4, **characterised in that** the strips (24,28) are formed on a flexible resilient layer (10), and the insulating means comprises insulating means (32) positioned at the spaces between the conductive strips (24,28) and separating the flexible layer (10) from the first means (14), the conductive strips (24,28) being held from the first means (14) by the resilience of the flexible layer (10) until the layer (10) is flexed towards the first means (14) by the applied force.

8. A sensor according to any one of claims 4 to 7, **characterised in that** the conductive strips (24,28) are in the form of fingers extending from the conductor (22,26).

9. A sensor according to claim 8, **characterised in that** there are two conductors (22,26) extending longitudinally of the sensor and parallel to each other and spaced apart, some of the fingers (24) extending from one of the conductors (22) and the other fingers (28) extending from the other conductor (26), the fingers (24,28) being interdigitated.

10. A sensor according to claim 4, **characterised in that** the conductive strips (24,28) are in the form of fingers extending from the conductor (22,26) and **in that** the electrically insulating means comprises discrete insulating means (16), each positioned adjacent a root of a respective one of the fingers (24,28).

11. A sensor according to claim 7, **characterised in that** the electrically insulating means comprises an electrically insulating layer (32,39) positioned between the first electrically conductive means (18,20,18A) and the flexible resilient layer (10), the insulating layer (32,39) being provided with gaps (34) corresponding with the positions of the strips (e.g. 24,28) to enable the strips (24,28) to flex therethrough into contact with the first electrically conductive means (14) in response to the force.

12. A sensor according to any preceding claim, **characterised in that** the first electrically conductive means comprises an electrically conductive layer (14) of generally rectangular configuration with the electrically insulating means (39) placed thereon and overlain by the second electrically conductive means (18A), the electrically insulating means (39) and the second electrically conductive means (18A) lying within the width of the conductive layer.

13. A sensor according to claim 2, **characterised in that** the first electrically conductive means comprises an electrically conductive layer (14) of generally rectangular configuration with the electrically insulating means (39) placed thereon and overlain by the second electrically conductive means (18A), the electrically insulating means (39) and the second electrically conductive means (18A) lying within the width of the conductive layer (14), the second electrically conductive means (18A) comprising a layer substantially co-extensive with the first-mentioned conductive layer.

14. A sensor according to claim 2, **characterised in that** each of the discrete insulating means (39) extends across the width of the sensor.

15. A sensor according to claim 14, **characterised in that** each of the discrete insulating means (39) is positioned at an oblique angle to the longitudinal direction of the sensor.

16. A sensor according to any preceding claim, **characterised in that** the electrically conductive means (14;18,20,18A) are applied using a printed-circuit technique.

17. A sensor according to any preceding claim, **characterised by** a flexible cover layer (10) superimposed over the second means (18,20,18A) and for receiving the applied force.

18. A sensor according to any one of claims 1 to 16, **characterised by** a flexible cover layer (10) superimposed over the second means (18,20,18A), the said area encompassing part of the cover layer (10), and in that each protruding means (29) is positioned on the cover layer (10) to extend outwardly therefrom.

19. A sensor according to any preceding claim, **characterised in that** there are a plurality of the protruding means (29) positioned at intervals along the length of the sensor.

20. A sensor according to claim 17 or 18, **characterised by** a second cover layer (12), the second cover layer (12) being positioned on the side of the first electrically conductive means (14) which is opposite to the second electrically conductive means (18,20,18A), whereby the electrically conductive means (14,18,20,18A) and the electrically insulating means (16,39) are sandwiched between the two cover layers (10,12).

21. A sensor according to claim 20, **characterised in that** the two cover layers (10,12) are part of the same folded-over sheet of material (11).

22. A safety system for detecting an obstruction in a framed opening closable by a motor-driven slidable closure member, **characterised by** a sensor according to any preceding claim mounted on or adjacent the frame of the opening and so positioned that a said force is applied thereto when an obstruction within the opening is carried towards the frame by the sliding closable member, and control means responsive to the said contact between the second electrically conductive means and the first electrically conductive means to arrest motor-driven movement of the closable member.

23. A system according to claim 22, **characterised in that** the framed opening is a window opening and the closure member is a pane of window glass.

24. A system according to claim 23, **characterised in that** the window opening is a window opening in a motor vehicle.

## Patentansprüche

1. Kraftempfindlicher, sich in Längsrichtung erstreckender Sensor, der eine erste sich in Längsrichtung erstreckende elektrisch leitende Einrichtung (14), eine zweite elektrisch leitende Einrichtung (18, 20, 18A), die auf die erste Einrichtung (14) aufgelegt ist, eine elektrisch isolierende Einrichtung (16, 32, 39), die zwischen der ersten Einrichtung (14) und in Längsrichtung verteilten Teilen der zweiten Einrichtung (18, 20, 18A) angeordnet ist und sie von diesen beabstandet hält, wobei entsprechende verbleibende Teile (24, 28) der zweiten Einrichtung (18, 20, 18A) in Längsrichtung entlang des Sensors verteilt sind und normalerweise durch ihre eigene Elastizität elastisch von der ersten Einrichtung (14) beabstandet gehalten werden, jedoch jeweils unabhängig von den anderen verbleibenden Teilen (24, 28) und gegen die Elastizität in Reaktion auf eine auf dieses verbleibende Teil ausgeübte Kraft in Kontakt mit der ersten Einrichtung (14) gebogen werden können, so dass ein Ausgang in Reaktion auf Kraft erzeugt werden kann, und eine Einrichtung (29) umfasst, die eine Vielzahl vorstehender Einrichtungen aufweist, die sich quer zur Längsrichtung des Sensors und in einer Richtung von der ersten Einrichtung (14) weg von der zweiten Einrichtung (18, 20, 18A) nach außen erstrecken, um eine Kraft aufzunehmen und sie auf die verbleibenden Teile (24, 28) zu übertragen, **dadurch gekennzeichnet, dass** jede vorstehende Einrichtung (29) über einem entsprechenden lediglich der verbleibenden Teile (24, 28) angeordnet ist, wobei die verbleibenden Teile (24, 28) über denen eine der vorstehenden Einrichtungen (29) angeordnet ist, durch wenigstens ein verbleibendes Teil beabstandet werden, über dem keine der vorstehenden Einrichtungen (29) angeordnet ist, die Anordnung so ist, dass eine Kraft; die über einen Bereich ausgeübt wird, der eine Vielzahl der verbleibenden Teile (24, 28) und eine Vielzahl der in Längsrichtung verteilten Teile umschließt, zu den verbleibenden Teilen (24, 28) übertragen wird, über denen eine der vorstehenden Einrichtungen (29) angeordnet ist.

2. Sensor nach Anspruch 1, **dadurch gekennzeichnet, dass** die elektrisch isolierende Einrichtung eine Vielzahl einzelner isolierender Einrichtungen (16, 32, 39) umfasst, die in Längsrichtung beabstandet sind.

3. Sensor nach Anspruch 1 oder 2, **dadurch gekennzeichnet, dass** die verbleibenden Teile der zweiten Einrichtung Finger (24, 28) umfassen, die sich im Allgemeinen senkrecht zu der Längsrichtung erstrecken und sich über die erste Einrichtung (14) erstrecken.

4. Sensor nach Anspruch 1, **dadurch gekennzeichnet, dass** die zweite elektrisch leitende Einrichtung eine Vielzahl elektrisch leitender Streifen (24, 28) umfasst, die sich parallel zueinander erstrecken und nebeneinander, jedoch mit Zwischenräumen zwischen ihnen, entlang der Länge des Sensors angeordnet sind, wobei die Streifen (24, 28) mit einem Leiter (22, 26) verbunden sind, der sich in Längsrichtung des Sensors erstreckt.

5. Sensor nach Anspruch 4, **dadurch gekennzeichnet, dass** die isolierende Einrichtung eine Vielzahl separater isolierender Abstandshalter (16) umfasst, die zwischen entsprechenden Teilen lediglich wenigstens einiger der Streifen (24, 28) und der ersten Einrichtung (14) angeordnet sind.

6. Sensor nach Anspruch 5, **dadurch gekennzeichnet, dass** die Streifen (24, 28) auf einer flexiblen elastischen Schicht (10) ausgebildet sind.

7. Sensor nach Anspruch 4, **dadurch gekennzeichnet, dass** die Streifen (24, 28) auf einer flexiblen elastischen Schicht (10) ausgebildet sind und die isolierende Einrichtung isolierende Einrichtungen (32) umfasst, die an den Zwischenräumen zwischen den leitenden Streifen (24, 28) angeordnet sind und die flexible Schicht (10) von der ersten Einrichtung (14) trennen, wobei die leitenden Streifen (24, 28) durch die Elastizität der flexiblen Schicht (10) von der ersten Einrichtung (14) weggehalten werden, bis die Schicht (10) durch die ausgeübte Kraft auf die erste Einrichtung (14) zu gebogen wird.

8. Sensor nach einem der Ansprüche 4 bis 7, **dadurch gekennzeichnet, dass** die leitenden Streifen (24, 28) die Form von Fingern haben, die sich von dem Leiter (22, 26) aus erstrecken.

9. Sensor nach Anspruch 8, **dadurch gekennzeichnet, dass** zwei Leiter (22, 26) vorhanden sind, die sich in Längsrichtung des Sensors und parallel zueinander und voneinander beabstandet erstrecken, wobei sich einige der Finger (24) von einem der Leiter (22) aus erstrecken und sich die anderen Finger (28) von dem anderen Leiter (26) aus erstrecken und die Finger (24, 28) ineinandergreifen.

10. Sensor nach Anspruch 4, **dadurch gekennzeichnet, dass** die leitenden Streifen (24, 28) die Form von Fingern haben, die sich von dem Leiter (22 26) erstrecken, und dadurch, dass die elektrisch isolierende Einrichtung einzelne isolierende Einrichtungen (16) umfasst, die jeweils an eine Wurzel eines entsprechenden der Finger (24, 28) angrenzend angeordnet sind.

11. Sensor nach Anspruch 7, **dadurch gekennzeichnet, dass** die elektrisch isolierende Einrichtung eine elektrisch isolierende Schicht (32, 39) umfasst, die zwischen der ersten elektrisch leitenden Einrichtung (18, 20, 18a) und der flexiblen elastischen Schicht (10) angeordnet ist, wobei die isolierende Schicht (32, 39) mit Spalten (34) versehen ist, die den Positionen der Streifen (z.B. 24, 28) entsprechen, so dass sich die Streifen (24, 28) in Reaktion auf die Kraft durch sie hindurch in Kontakt mit der ersten elektrisch leitenden Einrichtungen (14) biegen können.

12. Sensor nach einem der vorangehenden Ansprüche, **dadurch gekennzeichnet, dass** die erste elektrisch leitende Einrichtung eine elektrisch leitende Schicht (14) mit im Allgemeinen rechteckiger Form umfasst, wobei die elektrisch isolierende Einrichtung (39) darauf angeordnet ist und von der zweiten elektrisch leitenden Einrichtung (18A) überlagert wird, und die elektrisch isolierende Einrichtung (39) sowie die zweite elektrisch leitende Einrichtung (18) innerhalb der Breite der leitenden Schicht liegen.

13. Sensor nach Anspruch 2, **dadurch gekennzeichnet, dass** die erste elektrisch leitende Einrichtung eine elektrisch leitende Schicht (14) mit im Allgemeinen rechteckiger Form umfasst und die elektrisch isolierende Einrichtung (39) darauf angeordnet ist und von der zweiten elektrisch leitenden Einrichtung (18A) überlagert wird, und die elektrisch isolierende Einrichtung (39) sowie die zweite elektrisch leitende Einrichtung (18A) innerhalb der Breite der leitenden Schicht (14) liegen und die zweite elektrisch leitende Einrichtung (18A) eine Schicht umfasst, die im Wesentlichen die gleiche Ausdehnung hat wie die erstgenannte leitende Schicht.

14. Sensor nach Anspruch 2, **dadurch gekennzeichnet, dass** jede der einzelnen isolierenden Einrichtungen (39) sich über die Breite des Sensors erstreckt.

15. Sensor nach Anspruch 14, **dadurch gekennzeichnet, dass** jede der einzelnen isolierenden Einrichtungen (39) in einem schiefen Winkel zur Längsrichtung des Sensors angeordnet ist.

16. Sensor nach einem der vorangehenden Ansprüche, **dadurch gekennzeichnet, dass** die elektrisch leitenden Einrichtungen (14; 18, 20, 18A) unter Verwendung eines Verfahrens für gedruckte Schaltungen aufgebracht werden.

17. Sensor nach einem der vorangehenden Ansprüche, **dadurch gekennzeichnet, dass** eine flexible Abdeckschicht (10) auf die zweite Einrichtung (18, 20, 18A) aufgelegt ist und die ausgeübte Kraft aufnimmt.

18. Sensor nach einem der Ansprüche 1 bis 16, **gekennzeichnet durch** eine flexible Abdeckschicht (10), die auf die zweite Einrichtung (18, 20, 18A) aufgelegt ist, wobei der Bereich einen Teil der Abdeckschicht (10) umschließt, und **dadurch**, dass jede vorstehende Einrichtung (29) auf der Abdeckschicht (10) so angeordnet ist, dass sie sich von ihr nach außen erstreckt.

19. Sensor nach einem der vorangehenden Ansprüche, **dadurch gekennzeichnet, dass** eine Vielzahl der vorstehenden Einrichtungen (29) in Abständen über die Länge des Sensors angeordnet sind.

20. Sensor nach Anspruch 17 oder 18, **gekennzeichnet durch** eine zweite Abdeckschicht (12), wobei die zweite Abdeckschicht (12) an der Seite der ersten elektrisch leitenden Einrichtung (14) angeordnet ist, die der zweiten elektrisch leitenden Einrichtung (18, 20, 18A) gegenüberliegt, so dass die elektrisch leitenden Einrichtungen (14, 18, 20, 18A) und die elektrisch isolierenden Einrichtungen (16, 39) zwischen den zwei Abdeckschichten (10, 12) eingeschlossen sind.

21. Sensor nach Anspruch 20, **dadurch gekennzeichnet, dass** die zwei Abdeckschichten (10, 12) Teil ein und derselben umgeschlagenen Platte aus Material (11) sind.

22. Sicherheitssystem zum Erfassen eines Hindernisses in einer eingerahmten Öffnung, die mit einem motorgetriebenen gleitenden Verschlusselement verschlossen werden kann, **gekennzeichnet durch** einen Sensor nach einem der vorangehenden Ansprüche, der an den Rahmen der Öffnung oder daran angrenzend angebracht und so positioniert ist, dass eine Kraft darauf ausgeübt wird, wenn ein Hindernis in der Öffnung **durch** das gleitende verschließbare Element auf den Rahmen zu transportiert wird, sowie eine Steuereinrichtung, die auf den Kontakt zwischen der zweiten elektrisch leitenden Einrichtung und der ersten elektrisch leitenden Einrichtung anspricht, um die motorgetriebene Bewegung des verschließbaren Elementes zu unterbrechen.

23. System nach Anspruch 22, **dadurch gekennzeichnet, dass** die eingerahmte Öffnung eine Festeröffnung ist und das Verschlusselement eine Scheibe aus Fensterglas ist.

24. System nach Anspruch 23, **dadurch gekennzeichnet, dass** die Fensteröffnung eine Fensteröffnung in einem Kraftfahrzeug ist.

## Revendications

1. Détecteur sensible à une force et s'étendant longitudinalement, comprenant un premier moyen électriquement conducteur s'étendant longitudinalement (14), un second moyen électriquement conducteur (18, 20, 18A) superposé sur le premier moyen (14), un moyen électriquement isolant (16, 32, 39) positionné entre et séparant le premier moyen (14) de parties longitudinalement distribuées du second moyen (18, 20, 18A), les parties restantes respectives (24, 28) du second moyen (18, 20, 18A) étant distribuées de manière longitudinale le long du détecteur et étant normalement maintenues de manière résiliente à l'écart du premier moyen (14) par leur résilience inhérente, mais étant chacune capable d'être fléchie indépendamment des autres parties restantes (24, 28) et à l'encontre de la résilience en contact avec le premier moyen (14) en réponse à une force appliquée sur cette partie restante afin de permettre à une sortie réagissant à la force d'être produite, et un moyen (29) définissant une pluralité de moyens en saillie s'étendant de manière transversale par rapport à l'extension longitudinale du détecteur, et à l'extérieur du second moyen (18, 20, 18A) dans une direction s'éloignant du premier moyen (14) afin de recevoir une force et de la transmettre aux parties restantes (24, 28), **caractérisé en ce que** chaque moyen en saillie (29) est positionné par-dessus une seule des parties restantes respectives (24, 28), les parties restantes (24, 28) ayant l'un desdits moyens en saillie (29) positionné par-dessus étant espacées par au moins une partie restante n'ayant pas l'un desdits moyens en saillie (29) positionné par-dessus, l'agencement étant tel qu'une force appliquée sur une surface comprenant une pluralité de parties restantes (24, 28) et une pluralité de parties distribuées de manière longitudinale est transmise aux parties restantes (24, 28) ayant l'un des moyens en saillie (29) positionné par-dessus.

2. Détecteur selon la revendication 1, **caractérisé en ce que** le moyen électriquement isolant comprend une pluralité de moyens d'isolation discrets (16, 32, 39) espacés de manière longitudinale les uns des autres.

3. Détecteur selon la revendication 1 ou 2, **caractérisé en ce que** les parties restantes du second moyen comprennent des contacts (24, 28) s'étendant généralement de manière perpendiculaire à la direction longitudinale et s'étendant par-dessus le premier moyen (14).

4. Détecteur selon la revendication 1, **caractérisé en ce que** le second moyen électriquement conducteur comprend une pluralité de bandes électriquement conductrices (24, 28) s'étendant parallèlement les unes aux autres et agencées côte à côte mais avec des espaces entre celles-ci le long du détecteur, les bandes (24, 28) étant reliées à un conducteur (22, 26) s'étendant longitudinalement par rapport au détecteur.

5. Détecteur selon la revendication 4, **caractérisé en ce que** le moyen d'isolation comprend une pluralité d'entretoises isolantes discrètes (16) positionnées uniquement entre les parties respectives d'au moins certaines des bandes (24, 28) et du premier moyen (14).

6. Détecteur selon la revendication 5, **caractérisé en ce que** les bandes (24, 28) sont formées sur une couche résiliente flexible (10).

7. Détecteur selon la revendication 4, **caractérisé en ce que** les bandes (24, 28) sont formées sur une couche résiliente flexible (10), et le moyen isolant comprend un moyen isolant (32) positionné au niveau des espaces entre les bandes conductrices (24, 28) et séparant la couche flexible (10) du premier moyen (14), les bandes conductrices (24, 28) étant maintenues à l'écart du premier moyen (14) par la résilience de la couche flexible (10) jusqu'à ce que la couche (10) soit fléchie vers le premier moyen (14) par la force appliquée.

8. Détecteur selon l'une quelconque des revendications 4 à 7, **caractérisé en ce que** les bandes conductrices (24, 28) sont sous la forme de contacts s'étendant à partir du conducteur (22, 26).

9. Détecteur selon la revendication 8, **caractérisé en ce qu'**il y a deux conducteurs (22, 26) s'étendant longitudinalement par rapport au détecteur et parallèlement l'un à l'autre et de manière espacée, certains des contacts (24) s'étendant à partir de l'un des conducteurs (22) et les autres contacts (28) s'étendant à partir de l'autre conducteur (26), les contacts (24, 28) étant interdigités.

10. Détecteur selon la revendication 4, **caractérisé en ce que** les bandes conductrices (24, 28) sont sous la forme de contacts s'étendant à partir du conducteur (22, 26), et **en ce que** le moyen électriquement isolant comprend des moyens isolants discrets (16), positionnés chacun de manière adjacente par rapport à une base de l'un des contacts respectifs (24, 28).

11. Détecteur selon la revendication 7, **caractérisé en ce que** le moyen électriquement isolant comprend une couche électriquement isolante (32, 39) positionnée entre le premier moyen électriquement conducteur (18, 20, 18A) et la couche résiliente flexible (10), la couche isolante (32, 39) étant munie d'espaces (34) correspondant aux positions des bandes (comme par exemple 24, 28) afin de permettre aux bandes (24, 28) de se fléchir en contact avec le premier moyen électriquement conducteur (14) en réponse à la force.

12. Détecteur selon l'une quelconque des revendications précédentes, **caractérisé en ce que** le premier moyen électriquement conducteur comprend une couche électriquement conductrice (14) de configuration généralement rectangulaire avec le moyen électriquement isolant (39) placé dessus et recouvert par le second moyen électriquement conducteur (18A), le moyen électriquement isolant (39) et le second moyen électriquement conducteur (18A) se trouvant dans la largeur de la couche conductrice.

13. Détecteur selon la revendication 2, **caractérisé en ce que** le premier moyen électriquement conducteur comprend une couche électriquement conductrice (14) de configuration généralement rectangulaire avec le moyen électriquement isolant (39) placé dessus et recouvert par le second moyen électriquement conducteur (18A), le moyen électriquement isolant (39) et le second moyen électriquement conducteur (18A) se trouvant dans la largeur de la couche conductrice (14), le second moyen électriquement conducteur (18A) comprenant une couche sensiblement coextensive avec la première couche conductrice mentionnée.

14. Détecteur selon la revendication 2, **caractérisé en ce que** chacun des moyens isolants discrets (39) s'étend au sein de la largeur du détecteur.

15. Détecteur selon la revendication 14, **caractérisé en ce que** chacun des moyens isolants discrets (39) est positionné à un angle oblique par rapport à la direction longitudinale du détecteur.

16. Détecteur selon l'une quelconque des revendications précédentes, **caractérisé en ce que** les moyens électriquement conducteurs (14 ; 18, 20, 18A) sont appliqués en utilisant une technique de circuit imprimé.

17. Détecteur selon l'une quelconque des revendications précédentes, **caractérisé par** une couche de recouvrement flexible (10) superposée sur les seconds moyens (18, 20, 18A) et destinée à recevoir la force appliquée.

18. Détecteur selon l'une quelconque des revendications 1 à 16, **caractérisé par** une couche de recouvrement flexible (10) superposée sur les seconds moyens (18, 20, 18A), ladite surface comprenant une partie de la couche de recouvrement (10), et en ce que chaque moyen en saillie (29) est positionné sur la couche de recouvrement (10) afin de s'étendre vers l'extérieur à partir de celle-ci.

19. Détecteur selon l'une quelconque des revendications précédentes, **caractérisé en ce qu'**il existe une pluralité de moyens en saillie (29) positionnés à des intervalles le long du détecteur.

20. Détecteur selon la revendication 17 ou 18, **caractérisé par** une seconde couche de recouvrement (12), la seconde couche de recouvrement (12) étant positionnée sur le côté du premier moyen électriquement conducteur (14) qui est opposé aux seconds moyens électriquement conducteurs (18, 20, 18A), moyennant quoi les moyens électriquement conducteurs (14, 18, 20, 18A) et les moyens électriquement isolants (16, 39) sont pris en sandwich entre les deux couches de recouvrement (10, 12).

21. Détecteur selon la revendication 20, **caractérisé en ce que** les deux couches de recouvrement (10, 12) font partie de la même feuille de matériau repliée (11).

22. Système de sécurité pour détecter une obstruction dans une ouverture à encadrement pouvant être fermée par un élément de fermeture coulissant entraîné par un moteur, **caractérisé par** un détecteur selon l'une quelconque des revendications précédentes monté sur. ou adjacent à l'encadrement de l'ouverture et positionné de telle sorte qu'une force soit appliquée dessus lorsqu'une obstruction au sein de l'ouverture est communiquée à l'encadrement par l'élément coulissant pouvant être fermé, et un moyen de commande réagissant audit contact entre le second moyen électriquement conducteur et le premier moyen électriquement conducteur afin d'arrêter le mouvement entraîné par moteur de l'élément pouvant être fermé.

23. Système selon la revendication 22, **caractérisé en ce que** l'ouverture à encadrement est une ouverture à vitre, et l'élément de fermeture est une vitre du verre à vitre.

24. Système selon la revendication 23, **caractérisé en ce que** l'ouverture à vitre est une ouverture à vitre d'un véhicule à moteur.
